# EUROPEAN PATENT SPECIFICATION

(11) **EP 0 956 246 B1**
(45) Date of publication and mention of the grant of the patent: **05.12.2001**
(21) Application number: 97906550.5
(22) Date of filing: 10.02.1997
(51) Int. Cl.: B65D 83/00, B67D 5/02, B67D 5/54

(54) **DUAL ACTION VALVE**
DOPPELVENTIL
VANNE A DOUBLE D'ACTION

(30) Priority: 08.07.1996 US 676568
(43) Date of publication of application: 17.11.1999
(73) Proprietor: C.H.& I. Technologies, Inc., Santa Paula, CA 93060 (US); Clark, James E., Santa Paula, CA 93060 (US)
(72) Inventor: CLARK, James, E., Santa Paula, CA 93060 (US)
(74) Representative: Casey, Lindsay Joseph
(86) International application number: PCT/US97/02130
(87) International publication number: WO 98/01367

(56) References cited:
- DE-A- 2 346 488
- US-A- 2 972 342
- US-A- 5 234 037
- US-A- 5 437 202
- US-A- 5 450 881
- US-A- 5 560 407

## Description

### TECHNICAL FIELD

The invention relates to the art of preparing containers for reuse, and more particularly to a dual action valve device to both propel fluid out of a container by air pressure and thereafter place the container under vacuum.

### BACKGROUND ART

The ability to easily and quickly prepare pressure containers filled with fluid for reuse by both emptying the container of fluid and also placing the container under a vacuum is important in many fields, such as in the lubricant field. There have been devices developed to take samples of fluid from a pressure container without excessive loss of vacuum in the container, such as the inventor's U.S. Patent No. 5,437,202. In the case of fluids such as used motor oil and other industrial fluids, skin contact with the fluid is best avoided, as long term exposure is harmful. A device which allows a used fluid container to be both emptied of the fluid and placed under vacuum is known from DE-A-2 346 488. The object of the present invention is to improve the prior art device in a view of facilitating its maintenance. The invention is defined in the appended claims.

### DISCLOSURE OF INVENTION

The invention provides a simple and reliable device which is used to propel fluid out of a sealed pressure container by use of pressurized air, and thereafter to place the pressure container under vacuum. The invention further provides a device used in conjunction with a pressurized air source which in a first mode will force a fluid out of a sealed pressure container, and in a second mode will utilize the pressurized air source to place a vacuum on the sealed pressure container.

The invention further provides a device which can be detachably attached to a sealed pressure container which is used to pressurize fluid out of the sealed pressure container by use of pressurized air, and thereafter to place the container under vacuum.

### BRIEF DESCRIPTION OF THE DRAWINGS

FIGURE 1 is a perspective view showing the device of the invention attached to a pressure cylinder containing fluid, and in its mode to expel the fluid using air pressure.

FIGURE 2 is a perspective view showing the device of the invention attached to a pressure cylinder, after the fluid has been expelled, and its mode to place a vacuum on the cylinder.

FIGURE 3 is a detail front view showing the cylindrical chamber portion of the device.

### BEST MODE FOR CARRYING OUT THE INVENTION

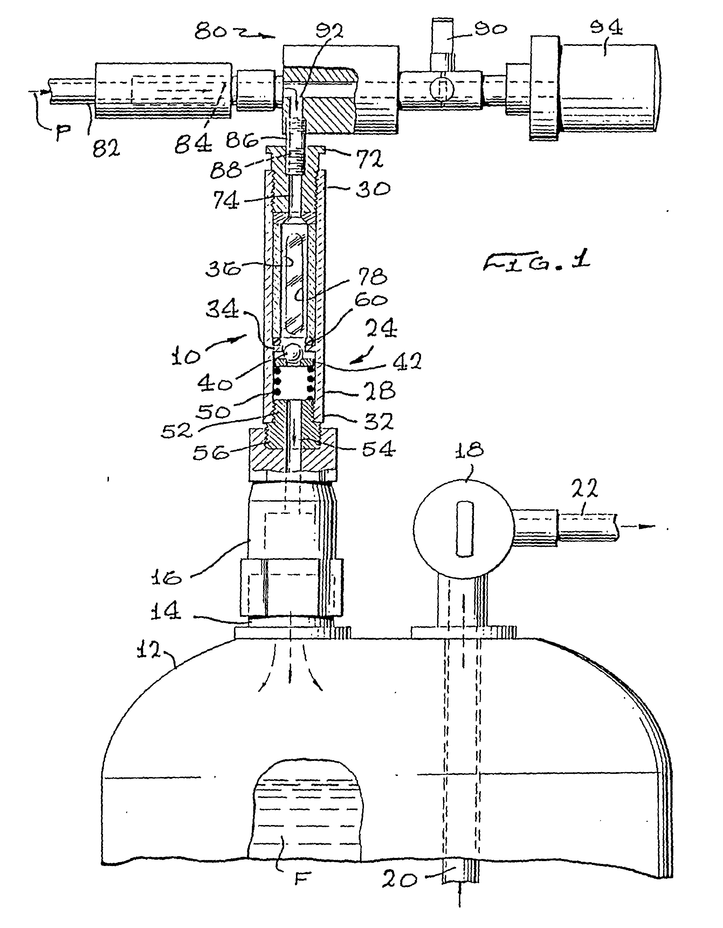

Referring to FIGS. 1 and 2, the device 10 of the invention is shown attached to a pressure cylinder 12 containing fluid F therein. The pressure cylinder 12 preferably has a dry break hydraulic fitting 14 which allows the device 10 with a mating and complementary hydraulic fitting 16 to be quickly and fluid-tightly attached thereto. The pressure cylinder 12 is also fitted with a fluid valve 18 which has a feed tube 20 extending down into the cylinder 12 and an outlet tube 22. A pressure gauge (not shown), can also be fitted on the container 12.

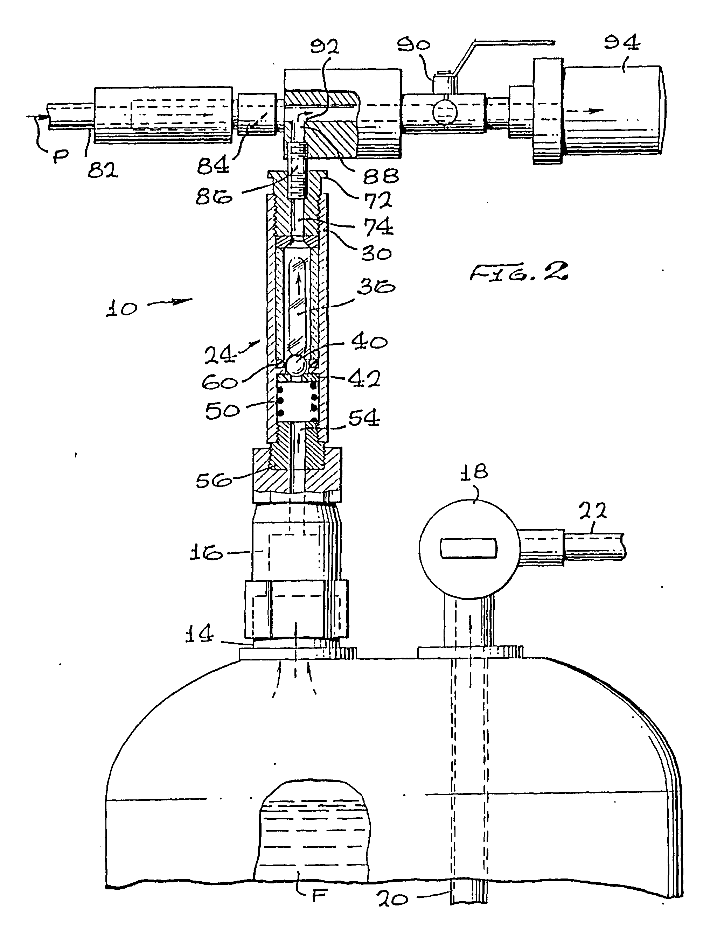

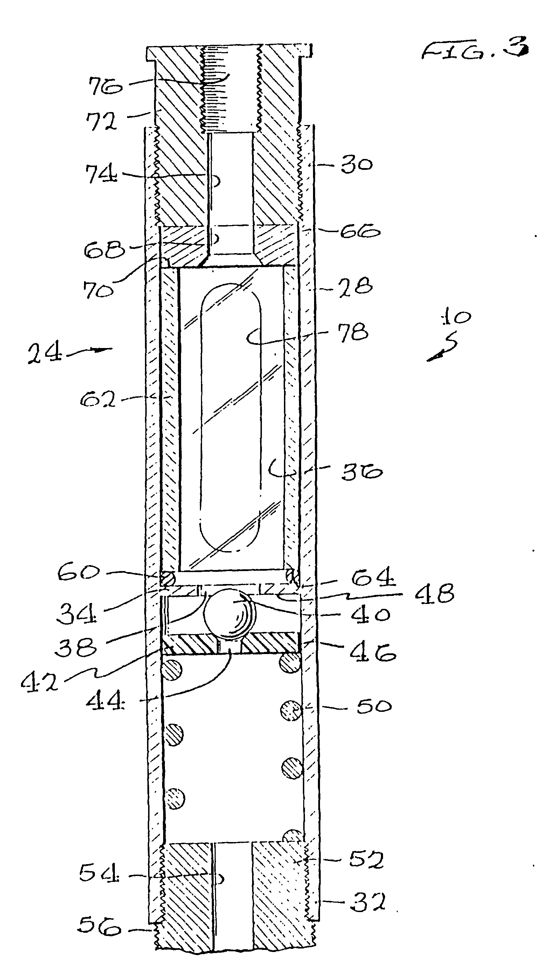

Referring to FIGS. 1-3, the device 10 has a cylindrical chamber portion 24 with a check ball 26 placed inside. The cylindrical chamber portion 24 can conveniently comprise a metal or plastic sleeve 28 with an upper end 30 and a lower end 32. A seating ring portion 34 extends inwardly into the interior chamber 36. The seating ring portion 34 has an enlarged hole 38 formed therethrough. A floatable check ball 40 is located in the interior chamber 36, and normally will sit atop a slidable seat 42 which has an aperture 44 formed longitudinally therethrough. The floatable check ball 40 can comprise an aluminum ball (hollow or solid), a hollow steel ball, or a plastic ball (hollow or solid), and is designed to be capable of floating on fluid F. The slidable seat 42 is slightly smaller in diameter than the interior diameter of the interior chamber 36 below the seating ring portion 34, and is designed to allow fluid and air to pass along its outer perimeter edge 46 when it is displaced downwardly away from contact with the lower surface 48 of the ring portion 34, and forms a seal therewith. The slidable seat 42 is preferably formed of a relatively hard rubber or plastic material, which closely conforms to the ring portion 34. The floatable check ball 40 is sized to freely pass through the enlarged hole 38 in the seating ring portion 34, and the floatable check ball 40 is sized to fluid-tightly seat in the entrance to the aperture 44 in the slidable seat 42. A biasing coil spring 50 is placed in the interior chamber 36 below the slidable seat 42 and is held in place, biasing the slidable seat 42 upwardly into contact with the lower surface 48 of the ring portion 34, by a lower cap 52 with a longitudinal channel 54, as is best shown in FIG. 3. The lower end 56 of the lower cap 52 can be threaded for attachment to the hydraulic fitting 16, as shown in FIGS. 1 and 2. In a preferred embodiment, the lower cap 52 can be threaded to screw into the lower end 32 which is also threaded.

Referring particularly to FIG. 3, an 0-ring 60 is placed on top of the seating ring portion 34 and fits snugly against the inside of the sleeve's walls 28. A clear tube 62 made of glass or other clear materials and sized to closely fit inside the sleeve 28 is placed into the sleeve 28 and rests with its bottom edge 64 on the 0-ring 60. A top seat 66 with an hole 68 formed longitudinally therethrough is placed inside the interior chamber 36 and contacts the inside of the interior chamber 36 and a top edge 70 of the clear tube 62. An upper cap 72 with a longitudinal channel 74 formed therethrough is attached to the top end 30 of the sleeve 28, and fluid tightly retains the clear tube 60 into place in the sleeve 62. In a preferred construction, the upper end 30 of the sleeve 28 is threaded to receive the threaded upper cap 72. The upper region of the channel 74 can be female threaded 76. The upper region sleeve 28, which can be conveniently made of opaque materials such as aluminum, stainless steel, brass or other metals and/or certain plastics and resins, has a window 78 formed therein so that the position of the floating ball 40 in the interior chamber 36 can be readily seen. In an alternate construction, if the sleeve 28 is constructed of transparent material, the transparent tube 28 and the window 76 in the sleeve can be foregone with (not shown).

Referring again to FIGS. 1 and 2, a vacuum generator 80 is fitted in gaseous communication with the top of the device 10. Pressurized air "P" is supplied at an inlet end 82 of the vacuum generator 80 and passes through a flow-through channel 84. The pressurized air "P" can be supplied by a compressor and/or a reservoir tank (not shown). The vacuum generator 80 has a fitting 86 which is attachable (e.g. by threads) to the top of the upper cap 72 and is in gaseous communication with its channel 74 and junction air channel 88. An air flow valve 90 is placed downstream of the junction 92 of the junction air channel 88 with the flow-through channel 84. The pressurized air flow "P" is expelled through an air exhaust muffler 94 which is located downstream of the air flow valve 90.

In FIG. 1, the air flow valve 90 is in its closed position to block the free flow of pressurized air P out of the muffler 94. Instead, the pressurized air P must flow down through the junction air channel 88, the channel 74 in the upper cap 72 and into the interior chamber 36. This pressure "P" will push the floatable ball downwardly into the entrance of the aperture 44 in the seat 42, and will bias the spring 50 downwardly, with the loose fit of the seat 42 allowing the air to pass through the space around its perimeter 46 and the inside walls of the sleeve 28. The air pressure will then pass through the channel 54 in the bottom cap 52, and into the pressure cylinder 12. By opening the fluid flow valve 18, the fluid F in the pressure cylinder will be pressurized and propelled up and out through the feed tube 20, through the open fluid valve 18 and out of the outlet tube 22. After the pressure cylinder 12 is emptied of fluid, the fluid flow valve 18 can be turned off. Preparing the pressure container 12 by placing it under a vacuum is then carried out, and is shown in FIG. 2.

In FIG. 2, the air flow valve 90 is moved to its open position to allow air flow to freely pass therethrough. In this position, the quickly moving pressurized air P through the flow-through channel 84 will create a low pressure zone by the venturi effect at junction 92 of the junction air channel 88 and the flow-through channel 84, and will cause air to be drawn upwardly through the device 10 and out of the pressure cylinder 12. In this mode, the slidable seat 42 will seat on the lower surface 48 of the ring portion 34, and the air will pass upwardly through the channel 54 in the lower cap 52, escape through the aperture 44 in the slidable seat 42 around the floatable ball 40 which will not be tightly sealing off the aperture 44, through the interior chamber 36 and out through the channel 74.

If a user wishes to place additional vacuum on the pressure container carrying fluid F, and some fluid F inadvertently enters the interior chamber 36, the floatable ball 40 will float upwardly on the rising fluid F level, pass through the opening 38 in the ring 34, and seal off the hole 68 in the upper seat 66 (not shown). This feature will prevent any fluid F from being drawn into the vacuum generator 80 and expelled into the environment. As a practical matter, however, as the free space above the rising fluid level F in the pressure cylinder 12 decreases, its pressure increases, and its ability to draw in additional fluid slows. This slowing provides feedback to the operator, and helps to prevent the pressure cylinder from being overfilled with fluid.

The device 10 thus provides an inexpensive, simple, easy to operate and a reliable tool is highly useful to quickly prepare pressure cylinders 12 for use in collecting fluids.

The drawings and the foregoing description are not intended to represent the only form of the invention in regard to the details of its construction and manner of operation. In fact, it will be evident to one skilled in the art that modifications and variations may be made without departing from the scope of the invention. Changes in form and in the proportion of parts, as well as the substitution of equivalents, are contemplated as circumstances may suggest or render expedient; and although specific terms have been employed, they are intended in a generic and descriptive sense only and not for the purpose of limitation, the scope of the invention being delineated in the following claims:

## Claims

1. A device to empty fluid from a sealed pressure container by use of pressurized air, and to thereafter place the container under vacuum, said device comprising;
a sleeve portion (28) with an upper end and lower end, an interior chamber (36) located therein, a ring portion (34) extending into said interior chamber and defining a seating surface (48) at a lower side thereof, said ring portion having a hole (38) formed therethrough;
a slidable seat means (42) with an aperture (44) formed therethrough, said seat means being located in said interior chamber below said ring portion (34) and sized to loosely fit in said interior chamber and adapted to seat on said ring portion;
an upper cap means (72) with a longitudinal air channel (74) formed therethrough located at said upper end of said sleeve portion;
a lower cap means (56) with a longitudinal air channel (54) formed therethrough placed at said lower end of said sleeve portion;
a spring means (50) placed in said interior chamber between said lower cap means and said slidable seat means (42), said spring means tending to bias said slidable seat means into contact with said ring portion;
a floatable ball (40) located above said slidable seat means (42) and adapted to fluid tightly seat on and seal off its aperture (44), said floatable ball being sized to freely pass through said hole (38) in said ring portion (34), and
a vacuum generating means (80) comprising a flow-through channel (84), a junction air channel (88) in communication with said flow-through channel at an upper end and in communication with said channel in said upper cap means (72), and an air flow valve (90) with opened and closed positions located downstream of said junction air channel.

2. The device of claim 1, wherein said upper (30) and lower (32) ends of said sleeve portions are female threaded and said upper (72) and lower (56) cap means are male threaded and are adapted to screw together.

3. he device of claim 1, wherein said interior chamber is generally cylindrical and said slidable seat (42) has a smaller diameter than an interior diameter of said interior chamber (36) below said ring portion (34).

4. The device of claim 1, further comprising a dry break hydraulic fitting (14) positioned below said lower cap means, and adapted to permit said device to be detachably attached to the pressure cylinder (12) to be evacuated of fluid and placed under vacuum.

5. The device of claim 1, further comprising a seat portion (66) with an opening (68) formed therethrough, positioned below said upper cap means (72), said ball (40) being adapted to seal off said opening in said seat means when said ball is brought into contact therewith.

6. The device of claim 1, wherein a window (78) is formed in said sleeve portion and said device further comprises a transparent tube (62) which is placed in said interior chamber above said ring portion, and which is fluid tightly retained in place by said upper cap portion.

7. The device of Claim 1, wherein the floatable ball (40) is a hollow aluminum ball.

## Patentansprüche

1. Vorrichtung zum Entleeren eines Fluids aus einem verschlossenen Druckbehälter durch Verwendung von Druckluft, und zum anschließenden Setzen des Behälters unter Vakuum, wobei die genannte Vorrichtung aufweist:
einen Hülsenteil (28) mit einem oberen und einem unteren Ende, einer darin angeordneten Innenkammer (36), einem Ringteil (34), der sich in die genannte Innenkammer erstreckt und eine Sitzfläche (48) an einer unteren Seite derselben definiert, wobei der genannte Ringteil ein durch denselben ausgebildetes Loch (38) aufweist;
ein verschiebbares Sitzmittel (42) mit einer durch dasselbe ausgebildeten Öffnung (44), wobei das genannte Sitzmittel in der genannten Innenkammer unter dem genannten Ringteil (34) angeordnet ist und solche Abmessungen hat, um locker in die genannte Innenkammer zu passen, und ausgeführt ist, um auf dem genannten Ringteil zu sitzen;
ein oberes Kappenmittel (72) mit einem in Längsrichtung durch dasselbe ausgebildeten Luftkanal (74), das an dem genannten oberen Ende des genannten Hülsenteils angeordnet ist;
ein unteres Kappenmittel (56) mit einem in Längsrichtung durch dasselbe ausgebildeten Luftkanal (54), das an dem genannten unteren Ende des genannten Hülsenteils angeordnet ist,
ein Federmittel (50), das in der genannten Innenkammer zwischen dem genannten unteren Kappenmittel und dem genannten verschiebbaren Sitzmittel (42) angeordnet ist, wobei das genannte Federmittel die Neigung hat, das genannte verschiebbare Sitzmittel in Kontakt mit dem genannten Ringteil vorzuspannen;
eine schwimmfähige Kugel (40), die über dem genannten verschiebbaren Sitzmittel (42) angeordnet und ausgeführt ist, um fluiddicht auf ihrer Öffnung (44) zu sitzen und diese abzudichten, wobei die genannte schwimmfähige Kugel solche Abmessungen hat, um frei durch das genannte Loch (38) in dem genannten Ringteil (34) hindurchzugehen; und
ein vakuumerzeugendes Mittel (80), das einen Durchflusskanal (84), einen Verbindungsluftkanal (88) in Verbindung mit dem genannten Durchflusskanal an einem oberen Ende und in Verbindung mit dem genannten Kanal in dem genannten oberen Kappenmittel (72), und ein Luftstromventil (90) mit offenen und geschlossenen Positionen angeordnet stromabwärts des genannten Verbindungsluftkanals aufweist.

2. Vorrichtung von Anspruch 1, bei der die genannten oberen (30) und unteren (32) Enden der genannten Hülsenteile Innengewinde aufweisen und die genannten oberen (72) und unteren (56) Kappenmittel Außengewinde haben und ausgeführt sind, um zusammengeschraubt zu werden.

3. Vorrichtung nach Anspruch 1, bei der die genannte Innenkammer allgemein zylindrisch ist und der genannte verschiebbare Sitz (42) einen kleineren Durchmesser als einen Innendurchmesser der genannten Innenkammer (36) unter dem genannten Ringteil (34) aufweist.

4. Vorrichtung nach Anspruch 1, die weiter ein trockenes Unterbrechungshydraulikanschlussstück (14) aufweist, das unter dem genannten unteren Kappenmittel positioniert und ausgeführt ist, um lösbare Befestigung der genannten Vorrichtung an dem von Fluid zu entleerenden und unter Vakuum zu setzenden Druckzylinder (12) zu ermöglichen.

5. Vorrichtung nach Anspruch 1, die weiter einen Sitzteil (66) mit einer durch denselben gebildeten Öffnung (68) aufweist, welcher unter dem genannten oberen Kappenmittel (72) positioniert ist, wobei die Kugel (40) ausgeführt ist, um die genannte Öffnung in dem genannten Sitzmittel abzudichten, wenn die genannte Kugel in Kontakt mit demselben gebracht wird.

6. Vorrichtung nach Anspruch 1, bei der ein Fenster (78) in dem genannten Hülsenteil ausgebildet ist und die genannte Vorrichtung weiter ein transparentes Rohrs (62) aufweist, das in der genannten Innenkammer über dem genannten Ringteil angeordnet ist, und das fluiddicht durch den genannten oberen Kappenteil an richtiger Stelle gehalten wird.

7. Vorrichtung von Anspruch 1, bei der die schwimmfähige Kugel (40) eine hohle Aluminiumkugel darstellt.

## Revendications

1. Dispositif pour vider un fluide d'un récipient pressurisé scellé par utilisation d'air sous pression, et mettre ensuite le récipient sous vide, ledit dispositif comprenant :
une partie de manchon (28) avec une extrémité supérieure et une extrémité inférieure, une chambre intérieure (36) placée à l'intérieur du manchon, une partie de bague (34) s'étendant dans ladite chambre intérieure et définissant une surface d'assise (48) au niveau d'un côté inférieur de celle-ci, ladite partie de bague étant traversée par un trou (38) ;
un moyen d'assise coulissable (42) traversé par une ouverture (44), ledit moyen d'assise étant placé dans ladite chambre intérieure en dessous de ladite partie de bague (34) et dimensionné pour s'engager de manière lâche dans ladite chambre intérieure et adapté en vue de reposer sur ladite partie de bague ;
un moyen de bouchon supérieur (72) traversé par un canal d'air longitudinal (74) situé au niveau de ladite extrémité supérieure de ladite partie de manchon ;
un moyen de bouchon inférieur (56) traversé par un canal d'air longitudinal (54) situé au niveau de ladite extrémité inférieure de ladite partie de manchon ;
un moyen de ressort (50) placé dans ladite chambre intérieure entre ledit moyen de bouchon inférieur et ledit moyen d'assise coulissable (42), ledit moyen de ressort tendant à charger préliminaire ledit moyen d'assise coulissable en contact avec ladite partie de bague ;
une bille flottante (40) située au-dessus dudit moyen d'assise coulissable (42) et adaptée pour reposer de manière étanche aux fluides sur et sceller son ouverture (44), ladite bille flottante étant dimensionnée pour passer librement à travers ledit trou (38) dans ladite partie de bague (34) ; et
un moyen de génération de vide (80) comprenant un canal d'écoulement (84), une canal d'air de jonction (88) en communication avec ledit canal d'écoulement au niveau d'une extrémité supérieure et en communication avec ledit canal dans ledit moyen de bouchon supérieur (72) et une valve d'écoulement d'air (90) à positions ouverte et fermée située en aval dudit canal d'air de jonction.

2. Dispositif selon la revendication 1, dans lequel lesdites extrémités supérieure (30) et inférieure (32) desdites parties de manchon sont à filetage femelle et lesdits moyens de bouchon supérieur (72) et inférieur (56) sont à filetage mâle et sont adaptés pour se visser ensemble.

3. Dispositif selon la revendication 1, dans lequel ladite chambre intérieure est de manière générale cylindrique et ladite assise coulissable (42) a un diamètre inférieur à un diamètre intérieur de ladite chambre intérieure (36) en dessous de ladite partie de bague (34).

4. Dispositif selon la revendication 1, comprenant en outre un raccord hydraulique ruptible à sec (14) positionné en dessous dudit moyen de bouchon inférieur, et adapté pour permettre audit dispositif d'être fixé de manière détachable au cylindre de pression (12) dont le fluide doit être évacué et qui doit être mis sous vide.

5. Dispositif selon la revendication 1, comprenant en outre une partie d'assise (66) traversée par une ouverture (68), positionnée en dessous dudit moyen de bouchon supérieur (72), ladite bille (40) étant adaptée pour sceller ladite ouverture dans ledit moyen d'assise quand ladite bille est mise en contact avec elle.

6. Dispositif selon la revendication 1, dans lequel une fenêtre (78) est formée dans ladite partie de manchon et ledit dispositif comprend en outre un tube transparent (62) qui est placé dans ladite chambre intérieure au-dessus de ladite partie de bague, et qui est maintenue de manière étanche aux fluides en place par ladite partie de bouchon supérieur.

7. Dispositif selon la revendication 1, dans lequel la bille flottante.(40) est une bille creuse en aluminium.
